# DEMANDE DE BREVET EUROPEEN

(11) **EP 1 768 023 A1**
(43) Date de publication de la demande: **28.03.2007**
(21) Numéro de dépôt: 06291488.2
(22) Date de dépôt: 21.09.2006
(51) Int. Cl.: G06F 9/46

(54) **Système de mise en oeuvre d'une application métier**

(30) Priorité: 22.09.2005 FR 0509714
(71) Demandeur: XCALIA, 75015 Paris (FR)
(72) Inventeur: Samson, Eric, 75015 Paris (FR)
(74) Mandataire: Bloch, Gérard

(57) **Abrégé**

Il s'agit d'une application métier (2) fondée sur au moins sur un service (3, 13, 23, 33) fonctionnel appelable. Le système comprend des moyens d'interface homme-machine (4) pour le pilotage de l'application (2), un serveur (5) d'exécution de l'application, un serveur (6, 16, 26, 36) d'hébergement du service et un serveur (7) d'appel automatique du service (3, 13, 23, 33) comprenant des moyens mémoire (8, 8', 22) contenant des données descriptives du service (3, 13, 23, 33) et du métier de l'application (2) et agencé pour, sous la commande des moyens d'interface homme-machine (4) et du serveur (5) de l'application, appeler le service (3, 13, 23, 33), recevoir les données relatives au service et les transformer pour être traitées dans le serveur d'application (5).

L'invention permet des échanges informatiques entre des métiers hétérogènes.

## Description

L'invention concerne un système de mise en oeuvre d'une application métier permettant de fédérer en un ensemble commun des données issues de fournisseurs de données et de traiter l'ensemble en temps réel.

Les premières réalisations de ce type ont vu le jour dans certaines grandes entreprises. Elles permettaient l'exploitation informatique, en fabrication, des données informatiques issues de certains métiers grâce au transfert automatique d'un fichier informatique appelé format neutre.

L'émergence des réseaux Intranet, Internet et surtout la croissance du nombre des métiers informatisés a entraîné le besoin de multiplication des échanges automatiques entre ces métiers.

Des organisations internationales ont commencé à penser à des architectures orientées services, plus brièvement SOA (Services Oriented Architecture), dans lesquelles les applications métiers sont fondées non sur des entités codées mais sur des services, pour mieux aligner les nouvelles technologies de l'information sur les métiers de l'entreprise et pour rendre plus flexible leur environnement de travail.

Par services, ou services fonctionnels, on entend en réalité des modules fonctionnels informatiques tels que modules fonctionnels de systèmes de paie, de facturation, de gestion de production ou de données techniques, clients, ou modules de CAD (Computer-Aided Design), de CAM (Computer-Aided Manufacturing), etc ... . C'est cette dernière signification qui sera retenue ici dans la suite du document.

Actuellement, une approche prolongeant celle des formats neutres consiste à développer un bus standard capable de permettre les échanges informatiques entre des services ou métiers hétérogènes. L'ESB (Enterprise Service Bus) en est un exemple. Une telle solution fonctionne tant que les impératifs d'échanges sont peu exigeants, mais au-delà, la solution n'est pas forcément performante.

On connaît par ailleurs les travaux de groupes de standardisation tels que les groupes OMG (Object Management Group), JDO (Java Data Object), JCA (Java Connector Architecture), JMS (Java Messaging Service), EJB (Enterprise Java Bean), SOAP (Services Oriented Architecture Protocol),...

Ces groupes de travail s'appuient notamment sur les capacités des langages Java (langage de programmation pour Web) et ceux du type WSDL (Web Service Definition Language) ou OWL (Ontologic Web Language) de permettre le développement d'applications métiers sur le Web.

On travaille aussi à des langages pour les métadonnées d'entreprise, tels que EMD (Enterprise Metadata Discovery), etc .... Mais les travaux sont encore inachevés ou délibérément incomplets.

La première étape de tous ces travaux est naturellement de parvenir à décrire formellement les services et les métiers les plus courants au moyen de données descriptives des services appelées méta - données, mais le problème est difficile du fait de leur diversité et de leur complexité.

Cette diversité est doublée de celle des types de systèmes ou de serveurs les hébergeant :
- systèmes transactionnels mainframes (CICS, Custom Information Control System, ou moniteurs de transactions pour gros ordinateurs), Middleware, MQ-series (middleware asynchrone orienté message), ou encore PGI (Progiciels de Gestion Intégrée), ou enfin de gestion de bases de données (DBMS, Data Base Management Systems) éventuellement relationnelles (RDBMS, Relational Data Base Management Systems) ou objet (OODBMS, Object Oriented Data Base Management Systems) et utilisation de langages d'interrogation tels que SQL (Structured Query Language) ou des langages orientés objet (OOQL, Object Oriented Query Languages).
- Systèmes hébergeant des applications métiers écrites en langage Web tels que Java et transmission en HTML (Hyper Text Markup Language) ou XML (Extended Markup Language).

Si l'on considère par exemple une application de visualisation des factures d'un client d'une société de vente de biens de consommation sur le Web, cette application métier écrite en Java doit disposer des données relatives à un service factures, à un service clients et à un service produits. Ces données sont supposées présentes en mémoires, mais n'y sont pas. Dans l'exemple considéré, elles ne peuvent qu'être obtenues par requête à un RDBMS et doivent être traduites en données XML. Ces opérations étant pour la plupart manuelles, la visualisation recherchée ne peut avoir lieu en temps réel et elle est impraticable.

En résumé et en simplifiant, une application SQL ne permet pas d'interroger ni même d'appeler des services appelables sur le Web. Et inversement, une application Java du Web ne permet pas d'appeler et d'interroger un service rattaché à un SGBDR ou à un système transactionnel ni à en recevoir de données relatives au service demandé.

Par suite, même si on disposait des données descriptives des services ou des métiers concernés, il ne serait pas possible de fédérer en un ensemble cohérent les données issues du Web et celles issues d'un RDBMS ou un OODBMS, ou dans tout autre système ci-dessus, ni a fortiori d'exploiter cet ensemble en temps réel.

Présente sur le marché depuis quelques années, par ses travaux dans le domaine des logiciels d'interrogation de bases de données de grande capacité, telles que RDBMS, OODBMS, ou autres sources de données accessibles sur le Web, fichiers XML ou binaires, la demanderesse a souhaité étendre la portée de ses produits aux architectures orientées services SOA et est ainsi arrivée à l'idée de son invention.

Ainsi, l'invention concerne un système de mise en oeuvre d'une application métier fondée sur au moins un service fonctionnel appelable, comprenant des moyens d'interface homme-machine pour le pilotage de l'application, un serveur d'exécution de l'application, un serveur d'hébergement du service et un serveur d'appel automatique du service comprenant des moyens mémoire contenant des données descriptives du service et du métier de l'application et agencé pour, sous la commande des moyens d'interface homme-machine et du serveur de l'application, appeler le service, recevoir les données relatives au service et les transformer pour être traitées dans le serveur d'application.

De préférence, la transformation des données relatives au service est automatique.

Par service appelable, on entend un service comportant une interface de programmation d'application (API, Application Program Interface).

Le serveur d'appel automatique du service joue ici le rôle d'intermédiaire entre le serveur d'exécution de l'application et le serveur d'hébergement du service.

Pour cela, le serveur d'appel automatique du service comporte un module d'intermédiation agencé pour se substituer à l'application métier le temps d'effectuer une requête métier de données relatives au service auprès du serveur d'hébergement du service et de les lui renvoyer. L'application métier peut ainsi exploiter en temps réel les données relatives au service.

De préférence, le serveur d'appel automatique du service comporte un module mappeur (de mise en correspondance) comportant les moyens mémoires contenant les données descriptives du service et les données descriptives du métier de l'application pour calculer des données descriptives de l'exécution des requêtes métiers et les ranger dans les moyens mémoires. Cela permet notamment de prendre ultérieurement en charge les exigences du métier non connues au moment du développement.

Avantageusement, le module d'intermédiation comporte un bloc d'exécution pour se substituer à l'application métier lors d'une phase de requête. Pour cela, la phase de requête de l'application étant exécutée grâce à un programme d'interrogation compilé, ledit programme compilé est enrichi d'instructions d'appels au module d'intermédiation aux endroits opportuns du programme lors d'une opération de post-compilation effectuée sur celui-ci.

Pour effectuer la requête des données relatives au service, le module d'intermédiation est agencé pour extraire les données descriptives de l'exécution des requêtes métiers des moyens mémoire les contenant et, pour effectuer la requête des données relatives au service, le bloc d'exécution comporte une fonction de traduction agencée pour traduire les requêtes au service en appels conformes à son interface de programmation d'application API, une fonction de sélection agencée pour sélectionner un pilote (driver) en fonction du type de serveur l'hébergeant et une fonction de commande du pilote sélectionné et d'exécution des requêtes traduites.

De préférence encore, le système de mise en oeuvre comportant au moins deux services appelables, le module d'intermédiation comporte un bloc moteur de règles agencé pour calculer, ordonner et ranger dans une mémoire programme des données descriptives de l'orchestration des appels aux dits services.

Le bloc moteur de règles est agencé pour calculer des règles d'exécution des appels aux services en fonction d'une requête de l'application métier des données descriptives des services et du métier et d'une grammaire.

Une caractéristique notable de l'invention est qu'il n'y a pas besoin de traduire les données relatives d'un des services en données relatives de l'autre des services pour exécuter l'application métier. On utilise les données natives de chaque service, en langage Web, par exemple en XML, ce qui assure une intégrité et une complétude maximales des résultats, seules capables de répondre aux impératifs de production les plus exigeants.

De préférence encore, le serveur d'appel automatique est connecté à un réseau informatique banalisé du type internet ou intranet pour y servir de serveur de données ou bénéficier des services Web, y est appelable depuis le serveur d'exécution de l'application et est connecté à un réseau informatique spécifique d'une entreprise, par exemple du type Ethernet, ou autres, de systèmes de gestion de bases de données hébergeant des services.

L'invention sera mieux comprise à la lecture de la description suivante du système de mise en oeuvre de l'application métier selon l'invention et du dessin l'accompagnant, sur lequel :
- la figure 1 représente le schéma par blocs fonctionnels du système de mise en oeuvre de l'application métier, selon l'invention, fondée sur plusieurs services appelables ;
- la figure 2 est une illustration simplifiée de la gestion des mémoires descriptives des services, du métier et de la mémoire programme dans le cas simple d'une application de visualisation de factures ;
- la figure 3 est un diagramme chronologique de fonctionnement du système selon l'invention.

L'annexe est une liste partielle de la grammaire spécifique du moteur de règles de l'invention.

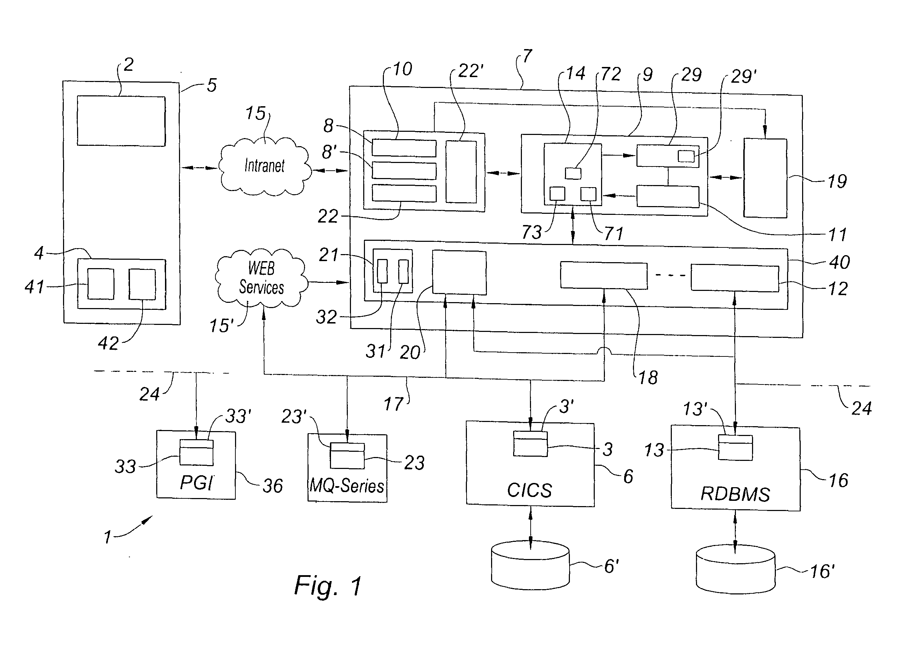

En référence à la figure 1, le système 1 comporte :
1) un serveur 5 comprenant une interface homme-machine 4, composée d'un clavier 41 et d'un écran 42, et permettant l'exécution d'une application fonctionnelle 2, ou métier, c'est-à-dire dont la fonction permet l'exercice d'un métier, par exemple un métier d'entreprise tel que décrit ci-dessus ;
2) un ensemble de systèmes informatiques hétérogènes 6, 16, 26, 36 hébergeant chacun des services 3, 13, 23, 33, .... Cet ensemble comprend les systèmes évoqués ci-dessus, dans l'exemple de la figure un système transactionnel CICS 6 et sa base de données transactionnelles 6', un système Middleware ou MQ-series 26, un progiciel de gestion intégrée 36 et un système de gestion de bases de données d'entreprise RDBMS 16 et la base de données relationnelles 16' du système 16 ;
3) un serveur 7 intermédiaire entre le serveur 5 et l'ensemble des systèmes 6, 16, 26, 36, et qui sera décrit plus loin ;
4) un ensemble de réseaux informatiques 15, 15' 17 et 24 reliant les serveurs 5, 7 et les systèmes 6, 16, 26, 36. Cet ensemble comprend :
   - un réseau informatique 17, par exemple Ethernet, reliant les systèmes transactionnels 6 et 26 au serveur intermédiaire 7 et/ou à un réseau informatique externe 15', ici Internet, auquel le serveur 7 est aussi relié, et
   - un réseau 24, du type Ethernet ou autres, reliant les systèmes d'entreprise 16 et 36 et/ou les serveurs 5 et 7.

Dans l'exemple de la figure 1, le serveur intermédiaire 7 est relié au serveur d'application 5 par un réseau Intranet 15, par exemple également par une liaison Ethernet, et au réseau Internet 15', d'une part, pour pouvoir éventuellement être piloté depuis une application sur le Web et. d'autre part, pour pouvoir effectuer des requêtes à des services Web, par exemple en recourant à un langage Web tel que WSDL ou SOAP.

Chacun des services 3, 13, 23, 33 comporte un API 3', 13', 23', 33', de sorte qu'il peut être appelé, programmé et exécuté par le canal du réseau auquel il est relié.

L'application métier 2 est fondée sur l'exploitation de données de service pouvant être obtenues par l'appel à des services parmi les services 3, 13, 23, 33. Elle est pilotée par l'interface 4.

Le serveur intermédiaire 7 va maintenant être décrit.

Il comprend classiquement tous ses moyens de contrôle-commande (non représentés) tels que superviseur, moniteurs temps réel, etc ..., un module d'entrées-sorties 40 et, ici spécifiquement, un module mappeur 10 ou EDME (Entity Data Mapping Engine) et un module d'intermédiation 9.

Le module mappeur 10 est un moteur de mappage (mapping) ou de mise en correspondance entre les données descriptives des services 3, 13, 23, 33 et les données descriptives des entités et des méthodes de manipulation des entités du métier (ou BMM, Business Method Model) de l'application métier 2.

Les données descriptives des services 3, 13, 23, 33 sont de deux sortes. On distingue :
- des données décrivant des entités manipulées (ou méta-données SEM, Service Entity Model) rangées dans une mémoire 8 des moyens mémoires du module mappeur 10 et
- des données décrivant des méthodes de manipulation des données précédentes (ou méta-données SMM, Service Method Model), rangées dans une autre mémoire 8' de ses moyens mémoires.

Les données descriptives des entités et des méthodes de manipulation d'entités du métier sont rangées dans une troisième mémoire 22 du module mappeur.

Les correspondances, effectuées entre les données descriptives des services 3, 13, 23, 33, et les données descriptives des entités et des méthodes de manipulation des entités du métier 2, sont mémorisées sous forme de tables de correspondances au moment de l'exécution en temps réel par le mappeur 10 à chaque requête de l'application 2 dans une quatrième mémoire 22'.

Ces tables de correspondances 22' se déduisent logiquement.

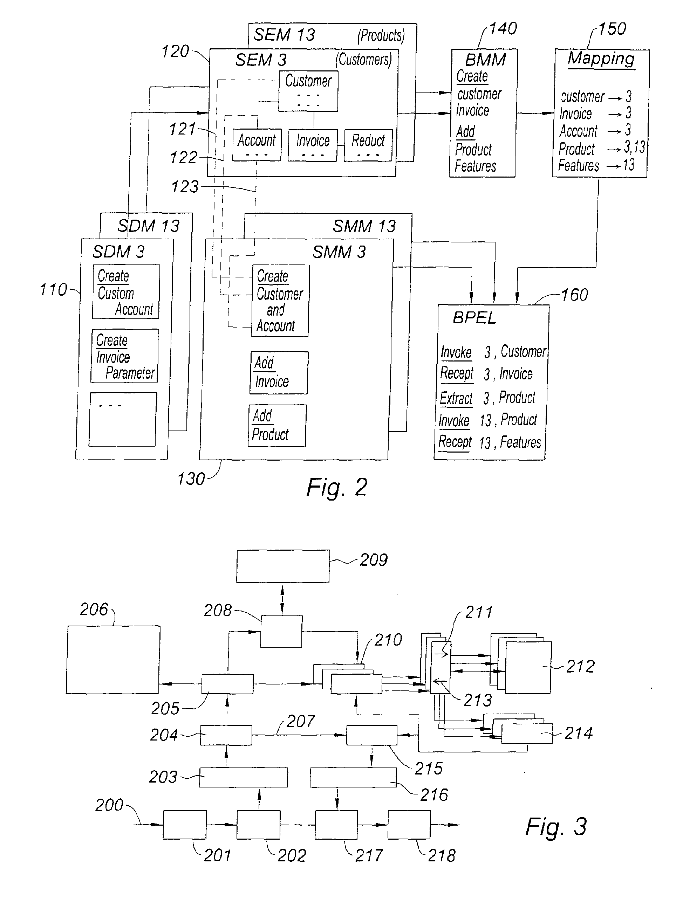

En considérant par exemple l'application ci-dessus de visualisation des factures, illustrée sur la figure 2, les mémoires 8 et 8' sont initialisées des méta-domées SEM et SMM de tous les services utiles à l'application métier 2, ces méta-données décrivant pour chaque service la structure 120 du service dans la mémoire 8 et la méthode de création 130 de la structure 120 du service, dans la mémoire 8', à partir de ses données 110 descriptives « bibliographiques » SDM (Service Description Model).

Sur l'exemple de la figure 2, un premier service 3 est une base de données de structure 120, repérée SEM 3, de données ou d'entités du type hiérarchique, l'entité référence client «customer» recouvrant les entités «account» et « invoice », laquelle recouvre l'entité référence produit « product ». La structure 120 du deuxième service 13, repérée SEM 13, est non visible et comporte plus simplement une entité « product » de référence produit à laquelle est rattachée une description du produit « product ».

A partir d'une liste 140 de données métier BMM objet d'une requête de l'application 2 demandant de retrouver une description « product features » d'un produit «product» objet d'une commande client «invoice », le module mappeur 10 en déduit la table 150 de correspondances (Mapping) indiquant les services utiles 3 et 13 fournissant les entités utiles pour fournir les réponses services à la requête et la range en mémoire 22. Une incompatibilité des exigences métier et des services disponibles peut être repérée à ce niveau de traitement.

En outre, le module mappeur 10 range les méta-données des mémoires 8, 8' et 22 des services 3, 13, 23, 33 dans un répertoire 19, rangées par références de services appelables 3, 13, 23, 33 avec les caractéristiques des API 3', 13', 23', 33' correspondantes.

Le module d'intermédiation 9 comporte un bloc d'exécution 14, un bloc moteur de règles 29 comportant un programme moteur M, une mémoire 29' contenant les éléments d'une grammaire spécifique (ou métalangage) et une mémoire programme 11.

Le bloc d'entrées-sorties 40 comporte un ensemble de pilotes 12, 18 bidirectionnels adaptés aux API des différents systèmes 6, 16, 26, 36 hébergeant les services 3, 13, 23, 33, un bloc 20 de traitement des réponses services et un bloc 21 de réception-transmission.

Le bloc 21 comporte une fonction 31 de transformation des réponses services en données lisibles pour l'application 2 et une fonction d'émission 32 vers l'application 2.

Le bloc d'exécution 14 comporte une fonction de sélection 71 agencée pour sélectionner le pilote nécessaire (ou « driver ») en fonction du type de serveur 6, 16, 26, 36 hébergeant le service 3, 13, 23, 33, une fonction de traduction 72 agencée pour traduire les requêtes aux services 3, 13, 23, 33 en appels conformes à leurs APIs respectifs 3', 13', 23', 33'et une fonction 73 de commande du pilote sélectionné et d'exécution des requêtes traduites.

Le moteur de règles 29 récupère le contenu des mémoires 22 et 8', calcule un programme d'exécution des requêtes et range ce programme en mémoire programme 11.

Le programme d'exécution des requêtes dans la mémoire 11 est calculé sous forme d'un programme en langage formel, appelé ici LSE, qui est un langage symbolique d'exécution du processus métier ou BPEL (Business Process Execution Language) et qui peut être considéré comme les données descriptives de l'orchestration des appels aux services.

Le LSE est le langage terminal calculé à partir des contenus des mémoires 22 et 8' considérés comme langage non terminal en appliquant la grammaire spécifique 29'.

Si les contenus des mémoires 22 et 8' changent à chaque requête, la grammaire 29' est invariable et ne dépend que de la configuration du système 1. Elle est établie initialement selon des méthodes mathématiques connues du domaine de l'intelligence artificielle et des systèmes experts et fait ensuite partie intégrante du système 1. On en donne en annexe une partie de son listing au format XSD (XML Schéma Definition).

Ainsi, pour reprendre l'exemple simple d'affichage de détail de factures, le programme moteur M du moteur de règles 29 calcule le contenu de la mémoire programme 11, c'est-à-dire le programme 160 d'exécution en langage symbolique LSE.

Pour cela, le programme moteur M analyse d'abord les données descriptives des entités des services SEM 120 selon des règles d'analyse incluses dans le programme M et prédéterminées par la structure des services concernés et des faits. Il en déduit les méthodes de génération SMM 130 selon des règles d'effet incluses dans le programme M et prédéterminées par les résultats exigibles de ces divers services, en tenant compte des liens de dépendance hiérarchiques, comme ceux repérés 121, 122, 123 entre ces entités, de la structure des données SEM vue plus haut.

Puis, en fonction du mapping 150 calculé plus haut, des données SMM 3 et 13 en 130, et de la grammaire spécifique 29' du moteur de règles 29, il calcule le programme d'exécution 160 des appels aux services 3 et 13 qui orchestre deux appels successifs, l'un au service 3 pour rechercher la référence « product » de la facture « invoice » du « customer » effectuant la requête, et l'autre au service 13 pour rechercher les données « features » du « product » ci-dessus. Ici le système 1 a transformé deux bases de données hiérarchiques réelles en une base de données relationnelles virtuelle.

La requête de l'application 2 est exécutée par lancement, depuis l'interface homme-machine 4, d'un programme d'interrogation de services faisant partie de l'application 2 et exprimé en langage préalablement compilé.

Pour que ce programme puisse accéder à ces services, il est enrichi d'instructions d'appels au module d'intermédiation 9 aux endroits opportuns de ce programme. Cet enrichissement peut être exécuté lors d'une opération de post-compilation effectuée sur le programme après sa compilation.

Le programme d'interrogation étant programmé en langage Java, les appels au module d'intermédiation 9 et la réponse de ce dernier sont programmés de façon conforme aux standards d'accès aux données actuellement connus, comme JDO (JSR12) et SDO.

Enfin, les méta données BMM de l'ensemble des applications 2 sont rangées dans le répertoire 19 en fonction de références métier et application au moment de l'intégration initiale du système 1.

Le fonctionnement global du système 1 va maintenant être décrit en référence à la figure 3.

Pour effectuer une requête de l'application métier 2, un utilisateur commande une étape de lancement 200 de l'application 2 par le clavier 41 de l'interface 4 du serveur 5.

Lors d'une étape 201, l'application 2 lance un programme d'interrogation Java qui exécute un appel 202 au module d'intermédiation 9 du serveur intermédiaire 7 transmis lors d'une étape 203 par le canal du réseau 15, du bloc d'entrées-sorties 40 et de son bloc de réception - transmission 21. L'appel est référencé A comme l'application 2 et contient des références d'entités Ei.

Le module d'intermédiation 9 recherche dans le répertoire 19, lors d'une étape 204, un ou des références de services parmi 3, 13, 23, 33 à interroger à partir des entités E objets de la requête effectuée par l'application 2 de référence A. Deux cas peuvent se présenter :
1) le répertoire 19 contient des références de services Sj en correspondance des entités Ei, auquel cas le module 9 lance le module mappeur 10, lequel, lors d'une étape 205, récupère (mais cela peut être le module d'intermédiation 9, comme sur la figure 1) les méta- données SEMj et SMMj de Sj dans le répertoire 19 et les range dans les mémoires 8 et 8', récupère les méta données BMM de l'application 2 de référence A et les range en mémoire 22 et effectue le mappage lors d'une étape 206 donnant le contenu de la mémoire 22' à partir des contenus des mémoires 8, 8' et 22 comme on l'a vu plus haut. Puis le module d'intermédiation 9 lance le bloc d'exécution 14.
2) Le répertoire 19 ne trouve pas de référence de service Sj correspondant aux entités Ei, auquel cas le module 9 lance (207) un message indiquant qu'il n'y a pas de service appelable pour répondre à la requête. Le message est transmis sur le réseau 15 par le bloc 21.

A l'étape 208, le module d'exécution 14 récupère le contenu SMMj et le mappage dans les mémoires 8' et 22' respectivement et lance le bloc moteur de règles 29 qui génère à l'étape 209 le programme d'exécution des requêtes (BPEL) à partir de la grammaire 29' qu'il range dans la mémoire programme 11.

A l'étape 210, le bloc d'exécution 14 lit le langage formel BPEL de la mémoire 11, sélectionne, par sa fonction de sélection 72, le pilote API 3', 13', 23', 33' du service 3, 13, 23, 33 et du serveur 6, 16, 26, 36 hébergeant le service, le traduit, par sa fonction de traduction 71, en requêtes de l'API sélectionné, et exécute les requêtes de l'API au moyen de sa fonction 73 par le canal des pilotes 12, 18 du bloc d'entrées-sorties 40.

A une étape 211, le service sélectionné 3, 13, 23, 33 traite la requête API et à l'étape 212 récupère les données sur la base de donnée concernée 6', 16', ou effectue les transactions habituelles auprès de son fournisseur de données, par exemple l'Internet 15'.

A l'étape 213, le service sélectionné 3, 13, 23, 33 renvoie les données récupérées, sous forme natives, en langage Web par exemple en XML, ce qui assure une intégrité et une complétude maximales des résultats, au bloc d'entrées-sorties 40 qui, lors d'une étape 214, les retransmet vers le bloc d'exécution 14 pour, par bouclage sur l'étape 210, compléter avec elles l'exécution du programme BPEL de la mémoire 11 ou pour lancer une étape 215 de retransmission par le bloc 21 du bloc d'entrées-sorties 40 vers l'application 2 par le canal 216 du réseau intranet 15.

En réception des données de services lors d'une étape 217, l'application 2 est relancée comme si ces données étaient présentes en mémoire du serveur 5 hébergeant l'application.

A l'étape suivante 218 l'application est continuée.

On voit que le serveur intermédiaire 7 est un véritable serveur d'appel automatique de services effectuant une « intermédiation » entre un serveur métier comportant des applications « métiers » et des services informatisés complémentaires 3, 13, 23, 33 hébergés sur des systèmes hétérogènes fournisseurs de données également hétérogènes.

## Revendications

1. Système (1) de mise en oeuvre d'une application métier (2) fondée sur au moins un service (3, 13, 23, 33) fonctionnel appelable, comprenant des moyens d'interface homme-machine (4) pour le pilotage de l'application (2), un serveur (5) d'exécution de l'application, un serveur (6, 16, 26, 36) d'hébergement du service et un serveur (7) d'appel automatique du service (3, 13, 23, 33) comprenant des moyens mémoire (8, 8', 22) contenant des données descriptives du service (3, 13, 23, 33) et du métier de l'application (2) et agencé pour, sous la commande des moyens d'interface homme-machine (4) et du serveur (5) de l'application, appeler le service (3, 13, 23, 33), recevoir les données relatives au service (3, 13, 23, 33) et les transformer pour être traitées dans le serveur d'application (5).

2. Système selon la revendication 1, dans lequel le serveur (7) d'appel automatique du service (3, 13, 23, 33) joue le rôle d'intermédiaire entre le serveur (5) d'exécution de l'application (2) et le serveur (6, 16, 26, 36) d'hébergement du service (3, 13, 23, 33).

3. Système selon l'une des revendications 1 et 2, dans lequel le serveur (7) d'appel automatique du service (3, 13, 23, 33) comporte un module d'intermédiation (9) agencé pour se substituer à l'application métier (2).

4. Système selon l'une des revendications 1 à 3, dans lequel l'application métier (2) exploite en temps réel les données relatives au service (3, 13, 23, 33).

5. Système selon l'une des revendications 1 à 4, dans lequel le serveur (7) d'appel automatique du service (3, 13, 23, 33) comporte un module mappeur (10) comportant les moyens mémoires (8, 8', 22) contenant les données descriptives du service (3, 13, 23, 33) et les données descriptives du métier de l'application (2) et est agencé pour calculer des données descriptives (22') de l'exécution des requêtes métier.

6. Système selon l'une des revendications 3 à 5, dans lequel le module d'intermédiation (9) comporte un bloc d'exécution (14) agencé pour se substituer à l'application métier (2) lors d'une phase de requête (202-217).

7. Système selon la revendication 6, dans lequel la phase de requête (202) de l'application (2) est exécutée grâce à un programme d'interrogation compilé.

8. Système selon la revendication 7, dans lequel le programme d'interrogation est enrichi d'instructions d'appels au module d'intermédiation (9).

9. Système selon l'une des revendications 7 et 8, dans lequel le programme d'interrogation étant en langage Java, les appels au bloc d'intermédiation (9) et la réponse de ce dernier sont conformes aux standards JDO et SDO.

10. Système selon l'une des revendications 7 et 8, dans lequel le module d'intermédiation (9) est agencé pour extraire les données descriptives de l'exécution (LSE) des requêtes métier des moyens mémoires (22) les contenant.

11. Système selon l'une des revendications 6 à 10, dans lequel, pour effectuer la requête des données relatives au service, le module d'exécution (14) comporte une fonction de traduction (71) agencée pour traduire les requêtes au service (3, 13, 23, 33) en appels conformes à son API (3', 13', 23', 33') et une fonction de sélection (72) agencée pour sélectionner un pilote (12, 18) en fonction du type de serveur (6, 16, 26, 36) l'hébergeant.

12. Système selon l'une des revendications 1 à 11 comportant au moins deux services (3, 13, 23, 33) appelables, dans lequel le module d'intermédiation (9) comporte un bloc moteur de règles (29) agencé pour calculer, ordonner et ranger dans une mémoire programme (11) des données descriptives (LSE) de l'orchestration des appels aux dits services (3, 13, 23, 33).

13. Système selon la revendication 12, dans lequel le bloc moteur de règles (29) est agencé pour calculer un programme d'exécution (LSE) des appels aux services (3, 13, 23, 33) en fonction d'une requête de l'application métier (2), des données descriptives des services (SMM) et du métier (BMM), et d'une grammaire (29').

14. Système selon l'une des revendications 1 à 13, dans lequel le serveur d'appel automatique (7) est connecté à au moins un réseau informatique banalisé du type internet ou intranet (15, 15') et à au moins un réseau informatique d'entreprise (17,24).

15. Système selon la revendication 14, dans lequel le réseau informatique d'entreprise (17, 24) est choisi dans la famille du type Ethernet.
